# FASCICULE DE BREVET EUROPEEN

(11) **EP 4 702 276 B1**
(45) Date de publication et mention de la délivrance du brevet: **18.11.2026**
(21) Numéro de dépôt: 24748829.9
(22) Date de dépôt: 26.04.2024
(51) Int. Cl.: F17C 13/08

(54) **DISPOSITIF DE FIXATION D'UN RÉSERVOIR DESTINÉ À CONTENIR UN GAZ SOUS PRESSION AMÉLIORÉ**
VERBESSERTE VORRICHTUNG ZUR BEFESTIGUNG EINES TANKS ZUR AUFNAHME EINES UNTER DRUCK STEHENDEN GASES
IMPROVED DEVICE FOR ATTACHING A TANK INTENDED TO CONTAIN A PRESSURISED GAS

(30) Priorité: 28.04.2023 FR 2304296
(43) Date de publication de la demande: 04.03.2026
(73) Titulaire: PLASTIC OMNIUM NEW ENERGIES FRANCE, 69007 Lyon (FR)
(72) Inventeur: MARCHAL, Chloé, 1200 BRUXELLES (BE); DOLLE, Sébastien, 1200 BRUXELLES (BE); ROLLAND, Héloïse, 1200 BRUXELLES (BE); BOULANT, Yann, 1200 BRUXELLES (BE)
(74) Mandataire: LLR
(86) Numéro de dépôt international: PCT/EP2024/061539
(87) Numéro de publication internationale: WO 2024/223823

(56) Documents cités:
- CN-A- 107 120 529
- KR-A- 20180 117 968
- US-A1- 2004 075 034
- US-A1- 2020 248 874
- US-B2- 8 915 682

## Description

L'invention concerne les réservoirs destinés à contenir un gaz sous pression, notamment des réservoirs embarqués dans des véhicules automobiles. L'invention se rapporte plus précisément à un dispositif de fixation d'un réservoir destiné à contenir un gaz sous pression. Un gaz dont il est question est, par exemple, et non limitativement, le gaz naturel, les bio gaz, le gaz de pétrole liquéfié, l'hydrogène.

Les différentes fonctions du réservoir précité sont de :
- contenir le gaz sous pression, c'est-à-dire résister mécaniquement aux forces exercées par la pression du gaz,
- assurer l'étanchéité vis-à-vis de l'extérieur,
- assurer le remplissage en gaz sous pression, à l'aide d'une électrovanne montée à une extrémité longitudinale du réservoir,
- délivrer le gaz sous pression à l'aide de la même électrovanne,
- se fixer à la structure porteuse,
- résister aux conditions de transport et d'utilisation,
- résister aux agressions extérieures de l'environnement, mécaniques et thermiques,
- résister aux mises en condition de fabrication des réservoirs.

Ces réservoirs peuvent être montés sur tous matériels fixes ou mobiles (véhicules sur route, fer, mer, air, espace). Les réservoirs de gaz sous pression sont fabriqués en matériaux métalliques ou, plus récemment, en matériaux composites, pour des raisons de gain de masse et de sécurité.

Lorsque le réservoir est monté sur un véhicule automobile, il y est fixé à un élément de ce dernier tel qu'une traverse, en général via un col d'extrémité du réservoir qui permet d'y monter une électrovanne ou tout autre dispositif permettant la délivrance du gaz contenu à l'intérieur. A cet effet, un dispositif de fixation du réservoir est prévu pour relier le col d'extrémité à la traverse.

Les dispositifs de fixation de l'art antérieur sont souvent constitués d'un bloc plein en métal, qui leur confère une bonne résistance en cas de crash de véhicule, notamment dans la direction de l'axe longitudinal du réservoir. En revanche, un tel dispositif de fixation présente l'inconvénient d'être lourd et de rendre difficile le rattrapage des jeux entre le dispositif de fixation et le col d'extrémité du réservoir.

On connaît du document WO2021151684 un réservoir à hydrogène maintenu sur un cadre d'un véhicule automobile par un dispositif de fixation comportant notamment une languette semi-circulaire et un élément d'angle recevant le col du réservoir. L'élément d'angle est fixé par une vis sur un élément de bloc soudé au cadre. Un tel dispositif de fixation présente le désavantage que l'élément d'angle est difficile à réaliser avec précision pour permettre un accouplement satisfaisant entre ce dernier et le réservoir, notamment car la zone de réception accueillant le col du réservoir est définie uniquement par le pliage d'une tôle.

On connaît également du document US2019092827 un élément de fixation pour la fixation d'un col d'un réservoir sous pression, notamment pour véhicule. Le dispositif de fixation comprend un étrier, lequel est fixé sur le col du réservoir au niveau d'une ouverture, ainsi qu'un élément de retenue est disposé entre le col et l'ouverture. Un tel dispositif de fixation présente le désavantage de présenter une faible résistance en cas de crash du véhicule, notamment dans la direction de l'axe longitudinal du réservoir. Le positionnement du col du réservoir dans ce dispositif de fixation est également difficile à réaliser.

On connait également du document DE102018122439 un réservoir haute pression, notamment pour hydrogène, pour véhicule automobile. Le réservoir est fixé à la caisse du véhicule par au moins une plaque de liaison prolongée par des entretoises, laquelle est vissée sur des traverses. Un tel dispositif de fixation présente lui aussi le désavantage de présenter une faible résistance en cas de crash du véhicule, notamment dans la direction de l'axe longitudinale du réservoir, mais également de rendre le positionnement du col du réservoir dans ce dispositif de fixation difficile à réaliser.

On connait également des documents CN107120529, US2020248874, US2004075034, US8915682 et KR20180117968 des dispositifs de fixation d'un réservoir destiné à contenu un gaz sous pression pour véhicule automobile, qui comprennent une zone de réception et un collet de maintien, la zone de réception et le collet de maintien délimitant entre eux une ouverture de passage configurée pour recevoir le col d'extrémité du réservoir.

L'invention a notamment pour but de surmonter ces inconvénients en proposant un dispositif de fixation d'un réservoir à la fois léger et résistant aux crashs, simple de fabrication et permettant un positionnement facilité du col d'extrémité du réservoir.

A cet effet l'invention a pour objet un dispositif de fixation d'un réservoir destiné à contenir un gaz sous pression pour véhicule automobile,
**caractérisé en ce qu'il** comprend :
- un support constitué d'un unique élément de tôle découpée et pliée, comprenant une zone de réception délimitée par les bords d'une découpe pratiquée dans une zone centrale de la tôle et configurée pour recevoir un col d'extrémité du réservoir de gaz sous pression, ainsi qu'un corps muni de deux parois de renfort opposées obtenues par pliage de la tôle et s'étendant sensiblement selon un plan normal à l'axe longitudinal le long duquel s'étend le réservoir, et
- un collet de maintien fixé sur le support, la zone de réception et le collet de maintien délimitant entre eux une ouverture de passage configurée pour recevoir le col d'extrémité du réservoir.

Grâce au fait que le support soit constitué d'un unique élément de tôle découpée et pliée et d'un collet de maintien, le dispositif de fixation selon l'invention est particulièrement léger. Une bonne résistance aux chocs et aux efforts subis dans le sens longitudinal du réservoir est également assurée par le fait que le corps soit muni de deux parois de renfort opposées obtenues par pliage de la tôle et s'étendant sensiblement selon un plan normal à l'axe longitudinal le long duquel s'étend le réservoir. Le fait que la zone de réception du col d'extrémité du réservoir de gaz sous pression soit délimitée par les bords d'une découpe pratiquée dans une zone centrale de la tôle permet de définir une zone de réception avec précision. Le positionnement du col d'extrémité dans le dispositif de fixation s'en retrouve facilité, tout en conservant une méthode de fabrication simple. Le positionnement du col d'extrémité est également facilité grâce à la flexibilité apportée par le collet de maintien qui permet de compenser d'éventuels jeux, en offrant la possibilité d'insérer un élément intercalaire entre le col du réservoir et le collet de maintien.

Afin d'améliorer la compacité du dispositif de fixation et sa résistance aux efforts, les parois de renfort sont reliées entre elles par une paroi de réception du collet de maintien destinée à recevoir des moyens de fixation du collet de maintien au corps.

De préférence, l'ouverture de passage comprend un élément intercalaire tel qu'un élément annulaire de réception, notamment en matériau polymère, configuré pour recevoir le col d'extrémité du réservoir.

L'élément annulaire de réception est choisi pour bloquer une extrémité longitudinale du réservoir, par exemple, l'extrémité longitudinale du réservoir portant l'électrovanne (« on tank valve » ou « OTV » en terminologie anglo-saxonne), en empêchant, notamment, la rotation du col d'extrémité du réservoir autour de l'axe longitudinal du réservoir.

Alternativement, l'élément annulaire de réception est choisi pour libérer une extrémité longitudinale du réservoir, par exemple, l'extrémité longitudinale opposée à l'extrémité longitudinale du réservoir portant l'électrovanne, en permettant au col d'extrémité du réservoir de glisser dans l'élément annulaire de réception afin de permettre une dilatation sans entrave du réservoir suivant son axe longitudinal lors de son remplissage.

Selon un mode de réalisation particulier de l'invention qui permet d'améliorer le positionnement de l'élément annulaire de réception, l'élément annulaire de réception comprend une saillie et le collet de maintien comprend une rainure configurée pour recevoir la saillie.

De manière à alléger encore davantage le dispositif de fixation, le collet de maintien est constitué d'un unique élément de tôle découpée et pliée.

Selon un mode de réalisation particulier de l'invention qui permet de simplifier la fabrication du dispositif de fixation, et notamment le pliage de la tôle, les parois de renfort sont sensiblement parallèles entre elles.

Selon un mode de réalisation particulier de l'invention qui permet de simplifier encore davantage la fabrication du dispositif de fixation, et notamment le pliage de la tôle, le support a une section transversale en forme de U.

Afin d'améliorer la résistance aux efforts du dispositif de fixation, le corps comprend en outre une première paire de pattes de renfort obtenues par pliage de la tôle et reliant des extrémités libres des parois de renfort, de sorte à fermer en partie un volume délimité par les deux parois de renfort.

Afin d'améliorer encore davantage la résistance aux efforts du dispositif de fixation, le corps comprend en outre une deuxième paire de pattes de renfort obtenues par pliage de la tôle et reliant des faces opposées respectives des parois de renfort, de sorte à fermer en partie un volume délimité par les deux parois de renfort, les pattes de renfort de la deuxième paire de pattes étant opposées deux à deux à celles de la première paire de pattes.

Selon un mode de réalisation particulier de l'invention qui permet de simplifier la fabrication du dispositif de fixation, et notamment le pliage de la tôle, les pattes de renfort sont sensiblement parallèles entre elles.

Selon un mode de réalisation particulier de l'invention qui permet de simplifier encore davantage la fabrication du dispositif de fixation, et notamment le pliage de la tôle, les pattes de renfort s'étendent de manière sensiblement perpendiculaire aux parois de renfort.

Afin d'améliorer encore davantage la résistance aux efforts du dispositif de fixation, le corps comprend en outre au moins une languette de renfort obtenue par pliage de la tôle reliant deux segments opposés des bords de la découpe pratiquée dans la tôle, de sorte à fermer en partie un volume délimité par les deux parois de renfort et la zone de réception.

De manière à simplifier la fixation du dispositif de fixation au véhicule automobile, le corps comprend en outre des embases de fixation munies d'au moins un orifice de fixation destiné à recevoir des moyens de fixation du dispositif de fixation à une traverse de fixation du véhicule automobile.

De manière à simplifier la fixation du dispositif de fixation au véhicule automobile et la fabrication du dispositif de fixation, et notamment le pliage de la tôle, les embases de fixation sont obtenues par pliage d'un prolongement des pattes de renfort de la première paire de pattes, ce pliage étant de préférence réalisé à 90°.

Selon un mode de réalisation particulier de l'invention simplifiant la structure du dispositif de fixation et permettant une intégration différente au sein du véhicule automobile, les parois de support sont configurées pour recevoir entre elles une traverse de fixation du véhicule automobile.

De manière à simplifier la fixation du dispositif de fixation au véhicule automobile, au moins une des deux parois de renfort est munie d'au moins un orifice de fixation destiné à recevoir des moyens de fixation du dispositif de fixation à une traverse de fixation du véhicule automobile.

L'invention concerne également un réservoir destiné à contenir un gaz sous pression pour véhicule automobile, caractérisé en ce qu'il comprend un dispositif de fixation selon l'invention.

### Brève description des figures

L'invention sera mieux comprise à la lecture de la description qui va suivre donnée uniquement à titre d'exemple et faite en se référant aux dessins annexés dans lesquels :
[Fig.1] est une vue en perspective d'un réservoir destiné à contenir un gaz sous pression muni d'un dispositif de fixation à un véhicule automobile fixé à une traverse de véhicule automobile selon un premier mode de réalisation de l'invention ;
[Fig.2] est une vue en perspective du dispositif de fixation de la [Fig.1] ;
[Fig.3] est une vue en perspective d'un support du dispositif de fixation de la [Fig.1] ;
[Fig.4] est une vue de dessous du support de la [Fig.3] ;
[Fig.5] est une vue de côté de la tôle à partir de laquelle a été réalisée le support de la [Fig.3] ;
[Fig.6] est une vue en perspective du collet de maintien du dispositif de fixation de la [Fig.1] ;
[Fig.7] est une vue en perspective d'un élément annulaire de réception du dispositif de fixation de la [Fig.1] ;
[Fig.8] est vue en perspective dispositif de fixation à un véhicule automobile fixé à une traverse de véhicule automobile selon un deuxième mode de réalisation de l'invention ;
[Fig.9] est une vue en perspective d'un support du dispositif de fixation de la [Fig.8] ;
[Fig.10] est une vue de dessous du support de la [Fig.9] ;
[Fig.11] est une vue de côté de la tôle à partir de laquelle a été réalisée le support de la [Fig.8].
[Fig.12] est vue en perspective dispositif de fixation à un véhicule automobile selon un troisième mode de réalisation de l'invention, sans élément annulaire de réception ;
[Fig.13] est vue en perspective du dispositif de fixation à un véhicule automobile de la [Fig.12], avec élément annulaire de réception.

### Description détaillée

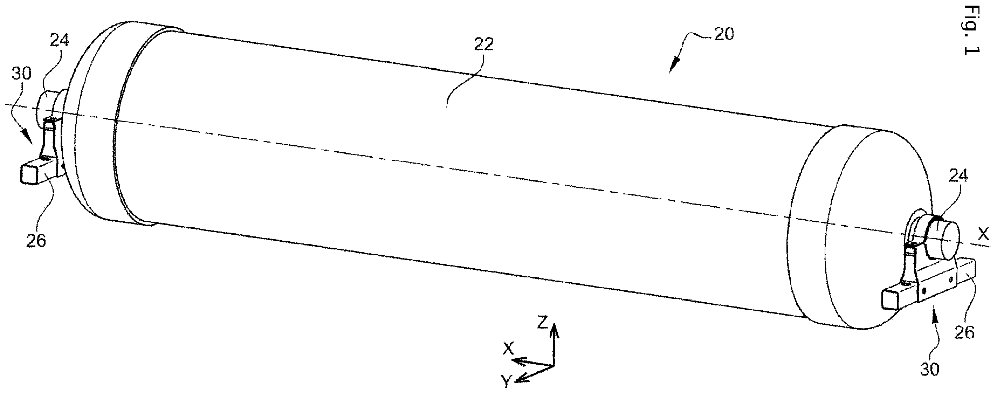

On a représenté à la [Fig.1] un réservoir 20 destiné à contenir un gaz sous pression muni d'un dispositif de fixation 30 selon un premier mode de réalisation de l'invention. Le réservoir 20 présente ici une partie centrale de forme générale cylindrique ou tubulaire, ou cylindre 22, qui s'étend selon un axe longitudinal X d'un repère orthonormé XYZ représenté sur la [Fig.1] à 4 et 8 à 10.

A chacune des extrémités longitudinales de ce cylindre 22, le réservoir 20 comprend un col d'extrémité 24. Les cols d'extrémité 24 sont ici de forme cylindrique ou tubulaire et font saillie à partir du cylindre 22, c'est-à-dire que leur section transversale (dans un plan de coupe parallèle au plan YZ) est circulaire. Ils peuvent être raccordés à des éléments fonctionnels permettant de distribuer le gaz hors du réservoir 20 à travers le col d'extrémité 24, comme par exemple une électrovanne (« on tank valve » selon la terminologie anglo-saxonne).

Le réservoir 20 est destiné à être embarqué dans un véhicule automobile, dont seules deux traverses de fixation 26 ont été représentées sur les figures 1, 2 et 8. Les traverses de fixation 26 permettent de relier et fixer le réservoir 20 au reste de véhicule.

Les traverses de fixation 26 sont des éléments longilignes, ici des poutres creuses de section transversale rectangulaire, s'étendant selon une direction sensiblement parallèle à un axe Y perpendiculaire à l'axe longitudinal X du réservoir.

Dans des variantes non représentées, les traverses de fixation 26 ont une section transversale d'une forme différente, par exemple circulaire, et donc être généralement de forme cylindrique ou tubulaire.

Le réservoir 20 est fixé à chacune de ses extrémités longitudinales à une traverse de fixation 26 via ses cols d'extrémité 24.

A cet effet, chaque col d'extrémité 24 est reçu par un dispositif de fixation 30 reliant et fixant le réservoir 20 à la traverse de fixation 26.

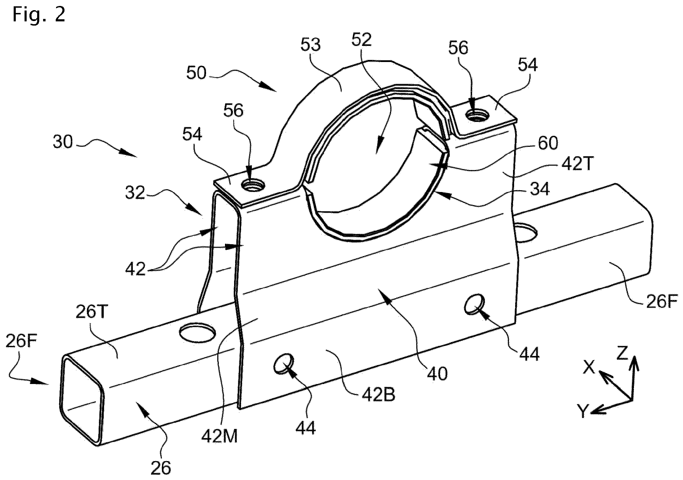

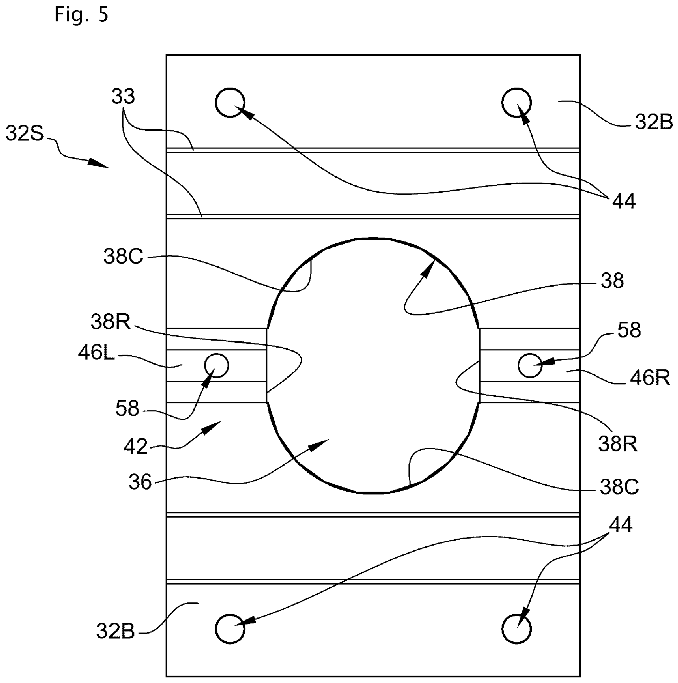

Le dispositif de fixation 30, représenté plus en détail à la [Fig.2], comprend un support 32 constitué, afin d'en alléger la structure, d'un unique élément de tôle 32S (« sheet metal » en terminologie anglo-saxonne) découpée et pliée. L'élément de tôle 32S est représenté avant pliage à la [Fig.5]. On y a notamment représenté les lignes de pliage 33.

Le support 32 du dispositif de fixation 30 comprend une zone de réception 34 délimitée par les bords 38 d'une découpe 36 pratiquée dans une zone centrale de la tôle 32S.

Dans les exemples représentés sur les figures, la découpe 36 est de forme sensiblement ovale, et plus particulièrement en forme d'ovale de Cassini. Plus précisément, la découpe 36 comprend un bord 38 continu divisé en bords rectilignes 38R parallèles, reliés à chacune de leurs extrémités libres par des bords semi-circulaires 38C.

Dans ce premier mode de réalisation, la tôle 32S est symétrique par rapport à un axe horizontal passant par l'axe de symétrie horizontal de la découpe 36, passant par les milieux des bords rectilignes 38R. Elle est également symétrique par rapport à un axe médian vertical passant par l'axe de symétrique vertical de la découpe 36.

La zone de réception 34 est configurée pour recevoir un col d'extrémité 24 du réservoir de gaz sous pression. De préférence, les bords 38 de la découpe formant la zone de réception 34 sont de forme complémentaire à celle du col d'extrémité 24 du réservoir qu'ils reçoivent.

Dans ce premier mode de réalisation de l'invention, la zone de réception 34 est plus particulièrement formée par les bords semi-circulaires 38C qui reçoivent le col d'extrémité 24. Leur forme semi-circulaire a été choisie pour être complémentaire à la forme circulaire du col d'extrémité 24.

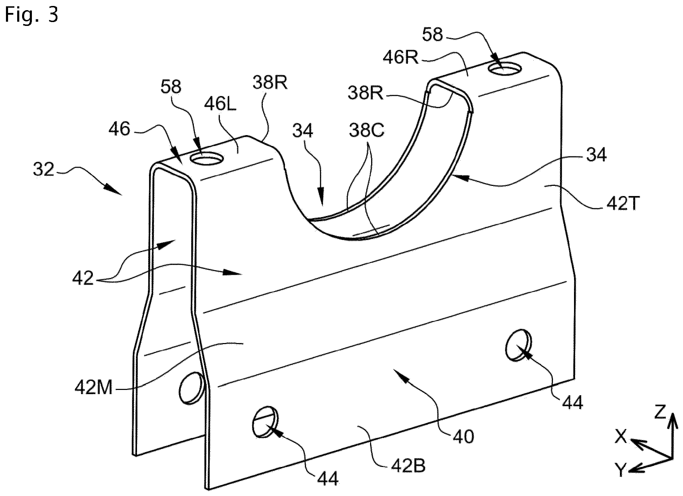

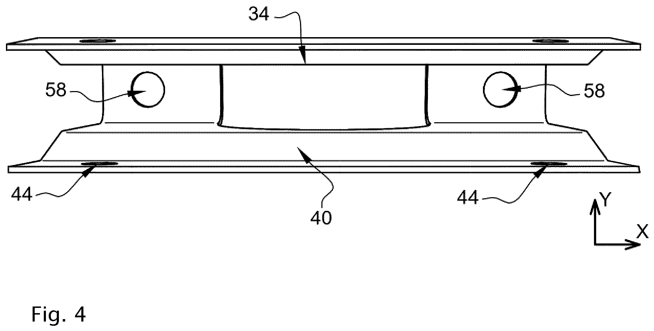

Comme on peut le voir plus en détail sur les figures 3 et 4, le support 32 comprend en outre un corps 40 muni de deux parois de renfort 42 opposées obtenues par le pliage de la tôle 32S.

Les parois de renfort 42 s'étendent sensiblement selon un plan normal à l'axe longitudinal X le long duquel s'étend le réservoir, à savoir un plan parallèle au plan YZ sur les figures.

Dans les exemples représentés sur les figures, afin de simplifier la fabrication du dispositif de fixation 30, et notamment le pliage de la tôle 32S, les parois de renfort 42 sont sensiblement parallèles entre elles. Plus précisément, les parois de renfort 42 sont symétriques par rapport à un plan médian parallèle au plan YZ.

Dans l'exemple représenté sur les figures 2 à 4, chaque paroi de renfort 42 comporte une section supérieure 42T (« top section » en terminologie anglo-saxonne), dans laquelle est pratiquée la découpe 36, sensiblement plane.

Cette section supérieure 42T est prolongée, à l'opposé de la découpe 36, par une section intermédiaire 42M (« middle section » en terminologie anglo-saxonne) sensiblement plane, oblique par rapport à la section supérieure 42T, de manière à s'écarter de la traverse de fixation 26.

En effet, dans ce premier mode de réalisation, les parois de support 42 sont configurées pour recevoir entre elles la traverse de fixation 26. Or, l'écartement entre les sections supérieures 42T étant ici inférieur à la largeur de la traverse de fixation 26, les sections intermédiaires 42M doivent diverger de manière à s'écarter de la traverse de fixation 26.

En d'autres termes, les sections intermédiaires 42M permettent au support 32 de chevaucher la traverse de fixation 26 sur laquelle le dispositif de fixation 30 est fixé. Les sections intermédiaires 42M de chaque paroi de renfort 42 s'étendent ainsi chacune dans la direction opposée à l'autre, c'est-à-dire divergent l'une de l'autre.

Chaque section intermédiaire 42M est prolongée, à l'opposé de la découpe 36, par une section inférieure 42B (« bottom section » en terminologie anglo-saxonne), sensiblement plane, comprenant l'extrémité libre de la paroi de support 42.

Les sections inférieures 42B sont plus particulièrement parallèles aux parois frontales 26F de la traverse de fixation 26, c'est-à-dire les parois frontales 26F de la traverse de fixation 26 s'étendant dans un plan parallèle au plan YZ.

Ici les sections inférieures 42B s'étendent de part et d'autre de la traverse de fixation 26. Leur écartement est donc supérieur à la largeur de la traverse de fixation 26.

En outre, les sections inférieures 42B sont plaquées contre les parois frontales 26F de la traverse de fixation 26. Les sections inférieures 42B sont donc ici planes et parallèles entre elles du fait de la section transversale rectangulaire de la traverse de fixation 26. Les sections inférieures 42B sont également parallèles aux sections supérieures 42T.

Pour assurer la fixation du dispositif de fixation 30 à la traverse de fixation 26, au moins une des deux parois de renfort 42 est munie d'au moins un orifice de fixation 44 destiné à recevoir des moyens de fixation (non représentés sur les figures 1 à 7) du dispositif de fixation 30 à la traverse de fixation 26.

Dans l'exemple représenté sur les figures 1 à 7, ce sont dans les sections inférieures 42B que sont pratiqués des orifices de fixation 44.

A cet effet, les sections inférieures 42B sont chacune munie d'une paire d'orifices de fixation 44 permettant le passage de moyens de fixation (non représentés sur la [Fig.2]) tels que des vis ou des rivets. Naturellement le nombre d'orifices de fixation 44 pratiqué dans chaque section inférieure 42B peut varier.

Les moyens de fixation du dispositif de fixation 30 à la traverse de fixation 26 sont ici destinés à coopérer avec les parois frontales 26F de la traverse de fixation 26.

Les parois de renfort 42 sont reliées entre elles par une paroi de réception 46, en l'occurrence divisée en deux sections de paroi : une paroi de réception gauche 46L et une paroi de réception droite 46R, disposées de part et d'autre de la zone de réception 34, qui relient ici plus particulièrement les sections supérieures 42T des parois de renfort.

La paroi de réception 46 est sensiblement plane et s'étend sensiblement perpendiculairement aux sections supérieures 42T, et plus particulièrement dans un plan parallèle au plan XY.

Ainsi, le corps 40 du support a une section transversale de forme générale en U dans un plan de coupe parallèle au plan XZ.

Le dispositif de fixation 30 comprend également un collet de maintien 50 fixé sur le support 32. Plus particulièrement, dans les exemples représentés sur les figures, c'est la paroi de réception 46 qui reçoit les moyens de fixation du collet de maintien 50 au corps 40 du support.

Comme on peut le voir à la [Fig.2], la zone de réception 34 et le collet de maintien 50 délimitent entre eux une ouverture de passage 52 configurée pour recevoir le col d'extrémité 24 du réservoir. Le col d'extrémité 24 étant ici de section circulaire, l'ouverture de passage 52 est ici de section circulaire.

L'ouverture de passage 52 s'étend radialement dans un plan sensiblement parallèle au plan YZ normal à l'axe longitudinal X du réservoir 20. Elle est délimitée dans ce plan par le collet de maintien 50 d'une part, et la zone de réception 34 du support 32 d'autre part. Dans la direction de l'axe longitudinal X, elle est délimitée par les parois de renfort 42 du corps du support.

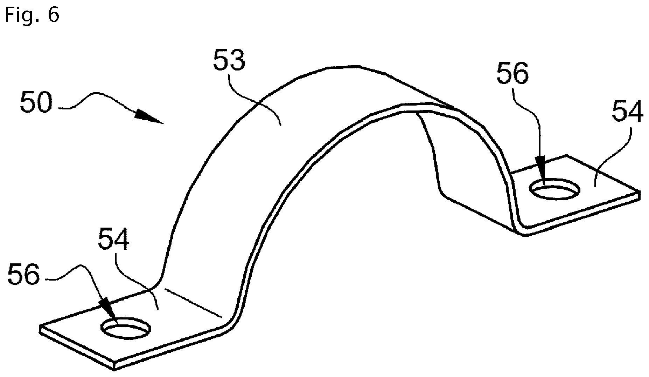

Le collet de maintien 50 est représenté individuellement à la [Fig.6]. De préférence, de manière à alléger encore davantage le dispositif de fixation 30, il est constitué d'un unique élément de tôle découpée et pliée, qui selon l'exemple représenté est un feuillet sensiblement rectangulaire dont la dimension longitudinale est très supérieure à sa dimension latérale.

Le collet de maintien 50 comprend notamment une arche centrale 53, de forme complémentaire à celle du col d'extrémité 24 du réservoir, et qui est donc ici une arche semi-circulaire. Le diamètre de cette arche centrale 53 est choisi de manière à être sensiblement le même que celui des bords semi-circulaires 38C de la découpe 36, afin de former l'ouverture de passage 52 circulaire permettant d'enserrer correctement le col d'extrémité 24.

Le collet de maintien 50 comprend en outre, de part et d'autre de l'arche centrale 53, deux patins de fixation 54. Les patins de fixation 54 sont délimités de l'arche centrale 53 par des épaulements qui forment les lignes de pliage de la tôle dont est issu le collet de maintien 50.

Les patins de fixation 54 sont fixés sur la paroi de réception 46 du corps 40. Ils sont ici sensiblement plans, tout comme la paroi de réception 46, pour maximiser leur surface de contact.

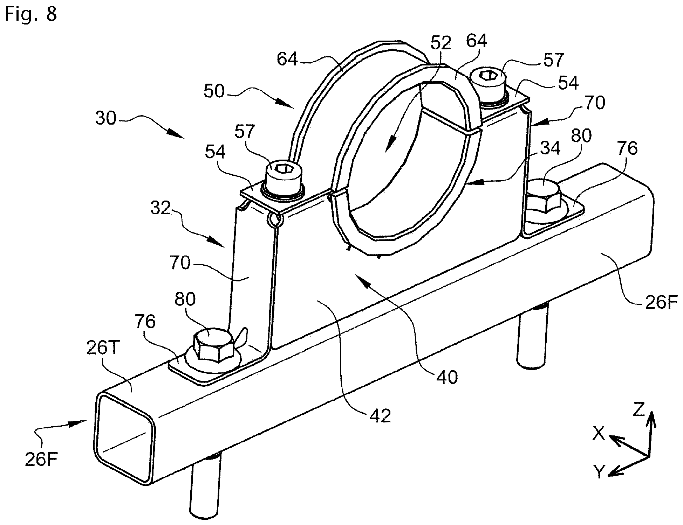

Un orifice de maintien 56 est pratiqué dans chacun des patins de fixation 54 pour permettre le passage de moyens de fixation 57 du collet de maintien 50 à la paroi de réception 46. Ces moyens de fixation 57, non représentés sur la [Fig.2] mais représentés sur la [Fig.8], sont ici des vis. Dans une variante non représentée, il pourrait s'agir de rivets.

Comme on peut le voir aux figures 3 et 4 notamment, la paroi de réception 46 comprend des orifices de réception 58 correspondants (représentés sur la [Fig.3] mais pas sur la [Fig.5]) pour permettre le passage des moyens de fixation 57. Naturellement, le nombre d'orifices de maintien 56 et de réception 58 peuvent varier, mais le nombre d'orifices de maintien 56 correspond de préférence au nombre d'orifices de réception 58 et vice-versa.

De préférence, est disposé dans l'ouverture de passage 52 un élément annulaire de réception 60, notamment en matériau polymère, configuré pour recevoir le col d'extrémité 24 du réservoir.

L'élément annulaire de réception 60 est choisi pour bloquer une extrémité longitudinale du réservoir 20, par exemple, l'extrémité longitudinale du réservoir 20 portant une électrovanne, en empêchant, notamment, la rotation du col d'extrémité 24 du réservoir autour de l'axe longitudinal X du réservoir 20.

Alternativement, l'élément annulaire de réception 60 est choisi pour libérer une extrémité longitudinale du réservoir 20, par exemple, l'extrémité longitudinale opposée à l'extrémité longitudinale du réservoir 20 portant l'électrovanne, en permettant au col d'extrémité 24 du réservoir de glisser dans l'élément annulaire de réception 60 afin de permettre une dilatation sans entrave du réservoir 20 suivant son axe longitudinal X lors de son remplissage.

L'élément annulaire de réception 60 comprend plus particulièrement un bandeau 62 dont la largeur correspond à celles du collet de maintien 50. De manière optionnelle, selon la fonction de l'élément annulaire de réception 60, le bandeau 62 est prolongé à chacun de ses bords libres par un rebord 64 formant un épaulement annulaire du bandeau 62. Dans ce cas, chaque rebord 64 recouvre les bords semi-circulaires 38C de la découpe 36 ainsi que les bords libres de l'arche centrale 53 du collet de maintien 50.

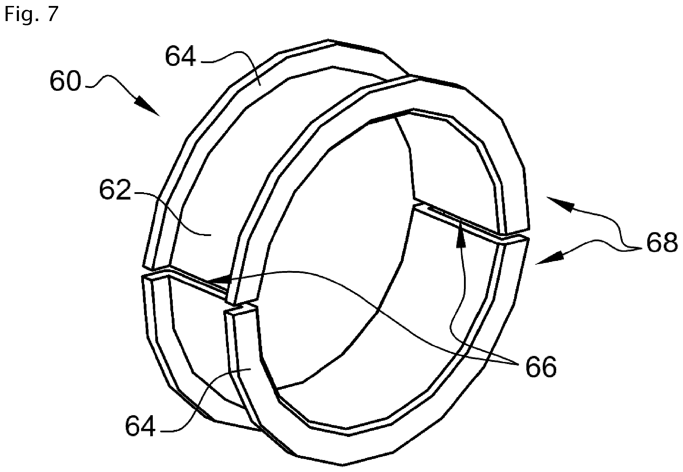

De préférence, pour faciliter son insertion dans l'ouverture de passage 52, l'élément annulaire de réception 60 comprend une ou plusieurs fentes 66, ce qui peut notamment le scinder en deux parties semi-circulaires 68, comme on peut le voir à la [Fig.7] notamment.

On va maintenant décrire, en référence aux figures 8 à 11, un deuxième mode de réalisation du dispositif de fixation 30 selon l'invention. On ne décrira ci-après que les éléments qui diffèrent du premier mode de réalisation.

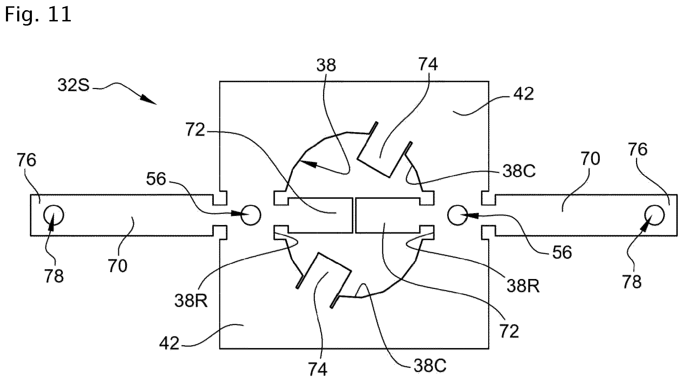

Le support 32 est toujours obtenu à partir d'un unique élément de tôle 32S découpée et pliée. L'élément de tôle 32S est représenté avant pliage à la [Fig.11].

En revanche, dans ce deuxième mode de réalisation, les parois de renfort 42 ne comprennent pas trois sections supérieure, intermédiaire et inférieure, mais une seule section sensiblement plane. En effet, dans ce deuxième mode de réalisation, il n'est pas nécessaire de prévoir de sections divergentes telles que les sections intermédiaires 42M car le support 32 n'enjambe pas la traverse de fixation 26. Cela est dû au fait que dans ce deuxième mode de réalisation, le support 32 n'est pas fixé sur les parois frontales 26F de la traverse de fixation, mais sur sa paroi supérieure 26T qui relie ces deux parois frontales 26F, c'est-à-dire la paroi parallèle au plan XY, comme on le verra plus loin.

Les parois de renfort 42 sont néanmoins reliées entre elles par des parois de réception gauche 46L et droite 46R comme dans le premier mode de réalisation.

En outre, comme dans le premier mode de réalisation, une découpe 36 est pratiquée dans une zone centrale de la tôle 32S et présente une forme similaire d'ovale de Cassini comprenant des bords rectilignes 38R parallèles, reliés à chacune de leurs extrémités libres par des bords semi-circulaires 38C.

Par ailleurs, afin d'améliorer la résistance aux efforts du dispositif de fixation 30, dans ce deuxième mode de réalisation, le corps 40 comprend en outre une première paire de pattes de renfort 70 obtenues par pliage de la tôle et reliant des extrémités libres respectives des parois de renfort 42, de sorte à fermer en partie un volume délimité par les deux parois de renfort 42. Plus précisément, les pattes de renfort 70 relient les extrémités libres des parois de renfort 42 s'étendant selon la direction Y.

Les pattes de renfort 70 sont ici délimitées par un bord sensiblement rectangulaire.

Comme on peut le voir en particulier à la [Fig.11], chaque patte de renfort 70 de la première paire est ici reliée respectivement à la paroi de réception gauche 46L et droite 46R par une paroi de liaison gauche 71L et droite 71R, de largeur inférieure à celle des pattes de renfort 70.

Dans une variante non représentée, les pattes de renfort 70 de la première paire sont soudées aux extrémités libres des parois de renfort 42.

Pour simplifier la fabrication du dispositif de fixation 30, et notamment le pliage de la tôle 32S, les pattes de renfort 70 sont sensiblement parallèles entre elles.

Dans ce mode de réalisation particulier, les pattes de renfort 70 s'étendent de manière sensiblement perpendiculaire aux parois de renfort 42. Ainsi, dans ce cas précis, les pattes de renfort 70 s'étendent chacune dans un plan parallèle au plan XZ.

De ce fait, le volume délimité par la première paire de pattes de renfort 70, les parois de renfort 42 et la paroi de réception 46 est ici sensiblement parallélépipédique.

Afin d'améliorer encore davantage la résistance aux efforts du dispositif de fixation, dans ce deuxième mode de réalisation, le corps 40 comprend en outre une deuxième paire de pattes de renfort 72 obtenues par pliage de la tôle 32S et reliant des faces opposées respectives des parois de renfort 42, de sorte à fermer en partie un volume délimité par les deux parois de renfort 42.

La deuxième paire de pattes de renfort 72 sont opposées deux à deux à celles de la première paire de pattes 70, et sont notamment disposées de part et d'autre de la zone de réception 34. Elles sont de préférence parallèles aux premières pattes de renfort 70. Ainsi, dans ce cas précis, les pattes de renfort 72 de la deuxième paire de pattes s'étendent chacune dans un plan parallèle au plan XZ.

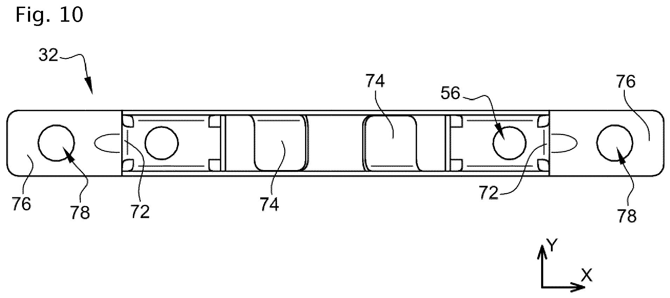

De préférence, la deuxième paire de pattes renfort 72 se trouve à l'intérieur du volume délimité par les premières pattes de renfort 70, la paroi de réception 46 et les parois de renfort 42, comme on peut le voir à la [Fig.10]. Ceci permet de renforcer la résistance du dispositif de fixation 30 aux efforts exercés dans la direction de l'axe longitudinal X.

Afin d'améliorer encore davantage la résistance aux efforts du dispositif de fixation 30, dans ce deuxième mode de réalisation, le corps 40 comprend en outre au moins une languette de renfort 74 obtenue par pliage de la tôle 32S reliant deux segments opposés du bord 38 de la découpe 36 pratiquée dans la tôle 32S, de sorte à fermer en partie un volume délimité par les deux parois de renfort 42 et la zone de réception 34.

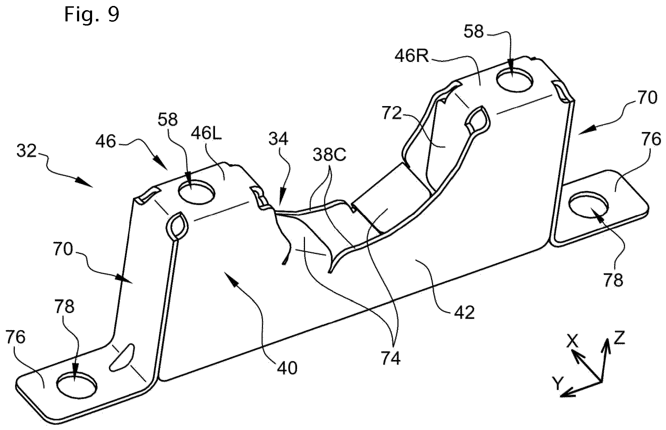

Dans l'exemple représenté sur les figures 8 à 11, le corps 40 comprend deux languettes de renfort 74. Plus particulièrement, les languettes de renfort relient les deux bords semi-circulaires 38C, de manière à combler l'espace entre les deux parois de renfort 42 au niveau de la zone de réception 34, comme on peut le voir à la [Fig.9].

Comme on peut le voir à la [Fig.11], avant pliage de la tôle 32S, les languettes de renfort 74 s'étendent de manière oblique par rapport aux premières pattes de renfort 70, formant un angle d'environ 45° avec les bords 38R de la découpe 36. De préférence, les languettes de renfort 74 font saillie à partir des bords 38C selon une symétrie axiale par rapport à la zone de réception 34, de manière à mieux combler l'espace entre les deux parois de renfort 42 au niveau de la zone de réception 34. On notera que dans des variantes non représentées, on prévoit une seule languette de renfort 74, ou plus de deux languettes de renfort 74, par exemple trois ou quatre languettes de renfort 74.

Dans ce deuxième mode de réalisation, et comme on peut le voir notamment à la [Fig.8], le corps 40 comprend en outre des embases de fixation 76 munies d'au moins un orifice de fixation 78 destiné à recevoir des moyens de fixation 80 du dispositif de fixation 30 à la traverse de fixation 26. Les moyens de fixation 80 du dispositif de fixation 30 à la traverse de fixation 26 sont ici des vis, mais il pourrait s'agir de rivets par exemple.

Les embases de fixation 76 sont obtenues par pliage d'un prolongement des pattes de renfort de la première paire de pattes 70, ce pliage étant de préférence réalisé à 90°.

Dans ce deuxième mode de réalisation, la zone de réception 34 du col d'extrémité 24 du réservoir est formée par les bords semi-circulaires 38C de la découpe, ainsi que par les languettes des renfort 74. Dans une variante non représentée de ce deuxième mode de réalisation, le support 32 ne comporte pas de languettes de renfort 74, la zone de réception est formée par les bords semi-circulaires 38C de la découpe.

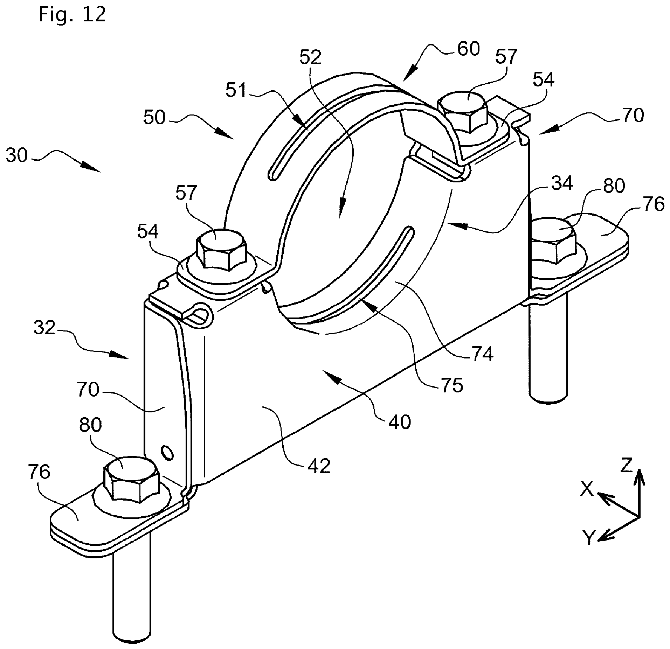

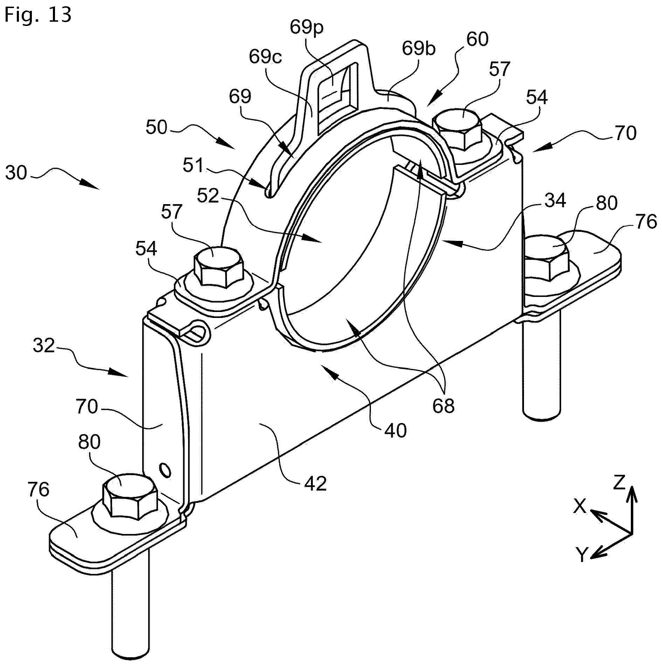

On va maintenant décrire, en référence aux figures 12 et 13, un troisième mode de réalisation du dispositif de fixation 30 selon l'invention. Ses éléments sont similaires à ceux du deuxième mode de réalisation hormis le collet de maintien 50, l'élément annulaire de réception 60 et la languette de renfort 74.

Comme on peut le voir à la [Fig.12], le collet de maintien 50 est en effet muni, dans sa partie centrale semi-circulaire, d'une rainure 51, par exemple traversante. La rainure 51 forme ici un arc de cercle et est sensiblement parallèle au bord du collet de maintien 50.

En outre, dans ce troisième mode de réalisation, le corps 40 ne comprend qu'une languette de renfort 74, de forme complémentaire à celle du collet de maintien 50, qui ensemble forment un anneau venant enserrer le col d'extrémité 24 du réservoir 20. Une rainure 75, par exemple traversante, est pratiquée dans la languette de renfort 74. La rainure 75 forme ici un arc de cercle sensiblement parallèle au bord du de la languette de renfort 74, et également au bord du collet de maintien 50. De préférence, la rainure 75 de la languette de renfort 74 et la rainure 51 du collet de maintien 50 sont de dimensions et de forme similaire.

Comme on peut le voir à la [Fig.13], les rainures 51 du collet de maintien 50 et 75 de la languette de renfort 74 sont configurées pour recevoir chacune une saillie 69 de l'élément annulaire de réception 60. La saillie 69 est ici venue de matière avec l'élément annulaire de réception 60. Dans cet exemple, l'élément annulaire de réception 60 étant composé de deux parties semi-circulaires 68, chaque partie semi-circulaire 68 porte une saillie 69, et est de préférence venue de matière avec chaque partie semi-circulaire 68. Dans une variante non représentée, l'élément annulaire de réception 60 est d'une seule pièce et comprend deux saillies 69 disposées de manière diamétralement opposée autour de l'élément annulaire de réception 60.

Chaque saillie 69 s'étend selon une direction perpendiculaire à celle de l'axe longitudinal X du réservoir, qui dans les exemples représentés sur les figures correspond à l'axe Z. Dans l'exemple représenté sur la [Fig.13], chaque saillie 69 comprend une base 69b s'étendant d'une extrémité à l'autre de la rainure 51, 75 dans laquelle elle est insérée, ainsi qu'une partie centrale 69c qui forme un prolongement de la base 69b s'étendant dans la direction d'extension de la saillie 69, ici l'axe Z.

Chaque saillie 69 est munie d'une patte élastique d'encliquetage 69p formée par une découpe pratiquée dans la saillie 69. La patte élastique d'encliquetage 69p vient s'encliqueter dans la rainure 51, 75 dans laquelle la saillie 69 est insérée. Dans l'exemple de la [Fig.13], la patte élastique d'encliquetage 69p est portée par la partie centrale 69c de la saillie 69.

L'invention n'est pas limitée aux modes de réalisation présentés et d'autres modes de réalisation apparaîtront clairement à l'homme du métier. On pourra notamment envisager de fixer le dispositif de fixation 30 selon le premier mode de réalisation à la paroi supérieure 26T de la traverse de fixation, ou de fixer le dispositif de fixation 30 selon le deuxième mode de réalisation aux parois frontales 26F de la traverse de fixation.

### Liste de références

20 : Réservoir
22 : Cylindre du réservoir
24 : Col(s) d'extrémité du réservoir
26 : Traverse(s) de fixation du réservoir
26F : Paroi frontale de la traverse
26T : Paroi supérieure de la traverse
30 : Dispositif de fixation du réservoir
32 : Support du dispositif de fixation
32S : Tôle du support
33 : Lignes de pliage de la tôle
34 : Zone de réception
36 : Découpe de la tôle
38 : Bords de la découpe
38C : Bords semi-circulaires de la découpe
38R : Bords rectilignes de la découpe
40 : Corps du support
42 : Parois de renfort du corps du support
42B : Section inférieure de la paroi de renfort
42M : Section intermédiaire de la paroi de renfort
42T : Section supérieure de la paroi de renfort
44 : Orifice de fixation du corps
46 : Parois de réception
46L : Paroi de réception gauche
46R : Paroi de réception droite
50 : Collet de maintien
51 : Rainure
52 : Ouverture de passage
53 : Arche centrale
54 : Patins de fixation
56 : Orifices de maintien
57 : Moyens de fixation du collet
58 : Orifices de réception
60 : Elément annulaire de réception
62 : Bandeau de l'élément annulaire
64 : Rebords de l'élément annulaires
66 : fentes de l'élément annulaire
68 : Parties semi-circulaires de l'élément annulaire
69 : Saillie de l'élément annulaire de réception
69b : Base de la saillie
69c : Partie centrale de la saillie
69p : Patte élastique d'encliquetage
70 : Première paire de pattes de renfort
71L : Paroi de liaison gauche
71R : Paroi de liaison droite
72 : Deuxième paire de pattes de renfort
74 : Languettes de renfort
75: Rainure
76 : Embases de fixation
78 : Orifices de fixation
80 : Moyens de fixation à la traverse

## Revendications

1. Dispositif de fixation (20) d'un réservoir destiné à contenir un gaz sous pression pour véhicule automobile, le dispositif comprenant :
- un support (32) constitué d'un unique élément de tôle (32S) découpée et pliée, comprenant une zone de réception (34) délimitée par les bords (38) d'une découpe (36) pratiquée dans une zone centrale de la tôle (32S) et configurée pour recevoir un col d'extrémité (24) du réservoir de gaz sous pression, ainsi qu'un corps (40) muni de deux parois de renfort opposées obtenues par pliage de la tôle (32S) et s'étendant sensiblement selon un plan normal à l'axe (X) le long duquel s'étend le réservoir (10), et
- un collet de maintien (50) fixé sur le support (32), la zone de réception (34) et le collet de maintien (50) délimitant entre eux une ouverture de passage (52) configurée pour recevoir le col d'extrémité (24) du réservoir.

2. Dispositif de fixation (20) selon la revendication précédente, dans lequel les parois de renfort (42) sont reliées entre elles par une paroi de réception (46) du collet de maintien (50) destinée à recevoir des moyens de fixation (57) du collet de maintien (50) au corps (40).

3. Dispositif de fixation (20) selon l'une quelconque des revendications précédentes, dans lequel l'ouverture de passage (52) comprend un élément annulaire de réception (60), notamment en matériau polymère, configuré pour recevoir le col d'extrémité (24) du réservoir.

4. Dispositif de fixation (20) selon l'une quelconque des revendications précédentes, dans lequel le collet de maintien (50) est constitué d'un unique élément de tôle découpée et pliée.

5. Dispositif de fixation (20) selon l'une quelconque des revendications précédentes, dans lequel les parois de renfort (42) sont sensiblement parallèles entre elles.

6. Dispositif de fixation (20) selon l'une quelconque des revendications précédentes, dans lequel le corps (40) comprend en outre une première paire de pattes de renfort (70) obtenues par pliage de la tôle (32S) et reliant des extrémités libres des parois de renfort (42), de sorte à fermer en partie un volume délimité par les deux parois de renfort (42).

7. Dispositif de fixation (20) selon l'une quelconque des revendications précédentes, dans lequel le corps (40) comprend en outre une deuxième paire de pattes de renfort (72) obtenues par pliage de la tôle (32S) et reliant des faces opposées respectives des parois de renfort (42), de sorte à fermer en partie un volume délimité par les deux parois de renfort (42), les pattes de renfort (72) de la deuxième paire de pattes étant opposées deux à deux à celles de la première paire de pattes (70).

8. Dispositif de fixation (20) selon la revendication 6 ou 7, dans lequel les pattes de renfort (70, 72) sont sensiblement parallèles entre elles.

9. Dispositif de fixation (20) selon l'une quelconque des revendications 6 à 8, dans lequel les pattes de renfort (70, 72) s'étendent de manière sensiblement perpendiculaire aux parois de renfort (42).

10. Dispositif de fixation (20) selon l'une quelconque des revendications précédentes, dans lequel le corps (40) comprend en outre au moins une languette de renfort (74) obtenue par pliage de la tôle (32S) reliant deux segments opposés (38C) des bords (38) de la découpe (36) pratiquée dans la tôle (32S), de sorte à fermer en partie un volume délimité par les deux parois de renfort (42) et la zone de réception (34).

11. Dispositif de fixation (20) selon l'une quelconque des revendications précédentes, dans lequel le corps (40) comprend en outre des embases de fixation (76) munies d'au moins un orifice de fixation (78) destiné à recevoir des moyens de fixation (80) du dispositif de fixation (20) à une traverse de fixation (26) du véhicule automobile.

12. Dispositif de fixation (20) selon l'une quelconque des revendications 6 à 10 prise en combinaison avec la revendication 11, dans lequel les embases de fixation (76) sont obtenues par pliage d'un prolongement des pattes de renfort de la première paire de pattes (70), ce pliage étant de préférence réalisé à 90°.

13. Dispositif de fixation (20) selon l'une quelconque des revendications précédentes, dans lequel les parois de support (42) sont configurées pour recevoir entre elles une traverse de fixation (26) du véhicule automobile.

14. Dispositif de fixation (20) selon l'une quelconque des revendications précédentes, dans lequel au moins une des deux parois de renfort (42) est munie d'au moins un orifice de fixation (44) destiné à recevoir des moyens de fixation du dispositif de fixation (20) à une traverse de fixation (26) du véhicule automobile.

15. Réservoir destiné à contenir un gaz sous pression pour véhicule automobile, **caractérisé en ce qu'**il comprend un dispositif de fixation (20) selon l'une quelconque des revendications précédentes.

## Patentansprüche

1. Befestigungsvorrichtung (20) zur Befestigung eines Tanks zur Aufnahme eines unter Druck stehenden Gases für Kraftfahrzeug, wobei die Vorrichtung umfasst:
- einen Träger (32), der aus einem einzigen Element aus zugeschnittenem und gebogenem Blech (32S) besteht, der eine Aufnahmezone (34) umfasst, die von den Rändern (38) eines Ausschnitts (36), der in einer mittiger Zone des Blechs (32S) ausgebildet ist, begrenzt ist und dazu ausgebildet ist, einen Endhals (24) des Tanks für das Druck stehende Gas aufzunehmen, sowie einen Körper (40) umfasst, der mit zwei gegenüberliegenden Verstärkungswänden versehen ist, die durch Biegen des Blechs (32S) erhalten sind und sich im Wesentlichen gemäß einer Normalebene zu der Achse (X), entlang der sich der Tank (10) erstreckt, erstrecken, und
- einen Haltekragen (50), der auf dem Träger (32) befestigt ist, wobei die Aufnahmezone (34) und der Haltekragen (50) zwischen einander eine Durchtrittsöffnung (52) definieren, die dazu ausgebildet ist, den Endhals (24) des Tanks aufzunehmen.

2. Befestigungsvorrichtung (20) nach dem vorhergehenden Anspruch, wobei die Verstärkungswände (42) miteinander verbunden sind durch eine Aufnahmewand (46) zur Aufnahme des Haltekragens (50), die dazu bestimmt ist, Befestigungsmittel (57) zur Befestigung des Haltekragens (50) an dem Körper (40) aufzunehmen.

3. Befestigungsvorrichtung (20) nach einem der vorhergehenden Ansprüche, wobei die Durchtrittsöffnung (52) ein ringförmiges Aufnahmeelement (60), insbesondere aus Polymermaterial, umfasst, das dazu ausgebildet ist, den Endhals (24) des Tanks aufzunehmen.

4. Befestigungsvorrichtung (20) nach einem der vorhergehenden Ansprüche, wobei der Haltekragen (50) aus einem einzigen Element aus zugeschnittenem und gebogenem Blech besteht.

5. Befestigungsvorrichtung (20) nach einem der vorhergehenden Ansprüche, wobei die Verstärkungswände (42) im Wesentlichen zueinander parallel sind.

6. Befestigungsvorrichtung (20) nach einem der vorhergehenden Ansprüche, wobei der Körper (40) ferner ein erstes Paar Verstärkungslaschen (70) umfasst, die durch Biegen des Blechs (32S) erhalten sind und die freien Enden der Verstärkungswände (42) so verbinden, dass sie ein von den zwei Verstärkungswänden (42) begrenztes Volumen zum Teil schließen.

7. Befestigungsvorrichtung (20) nach einem der vorhergehenden Ansprüche, wobei der Körper (40) ferner ein zweites Paar Verstärkungslaschen (72) umfasst, die durch Biegen des Blechs (32S) erhalten sind und die jeweiligen gegenüberliegenden Flächen der Verstärkungswände (42) so verbinden, dass sie ein von den zwei Verstärkungswänden (42) begrenztes Volumen zum Teil schließen, wobei die Verstärkungslaschen (72) des zweiten Laschenpaares denen des ersten Laschenpaares (70) paarweise gegenüberliegen.

8. Befestigungsvorrichtung (20) nach Anspruch 6 oder 7, wobei die Verstärkungslaschen (70, 72) im Wesentlichen zueinander parallel sind.

9. Befestigungsvorrichtung (20) nach einem der Ansprüche 6 bis 8, wobei die Verstärkungslaschen (70, 72) sich im Wesentlichen senkrecht zu den Verstärkungswänden (42) erstrecken.

10. Befestigungsvorrichtung (20) nach einem der vorhergehenden Ansprüche, wobei der Körper (40) ferner mindestens eine Verstärkungszunge (74) umfasst, die durch Biegen des Blechs (32S) erhalten ist, die die zwei gegenüberliegenden Segmente (38C) der Ränder (38) des Ausschnitts (36), der in dem Blech (32S) ausgebildet ist, so verbindet, dass es ein von den zwei Verstärkungswänden (42) und der Aufnahmezone (34) begrenztes Volumen zum Teil schließt.

11. Befestigungsvorrichtung (20) nach einem der vorhergehenden Ansprüche, wobei der Körper (40) ferner Befestigungsflächen (76) aufweist, die mit mindestens einer Befestigungsöffnung (78) versehen sind, die dazu bestimmt sind, Befestigungsmittel (80) zur Befestigung der Befestigungsvorrichtung (20) an einem Befestigungsquerträger (26) des Kraftfahrzeugs aufzunehmen.

12. Befestigungsvorrichtung (20) nach einem der Anspruch 6 bis 10 in Kombination mit Anspruch 11, wobei die Befestigungsflächen (76) durch Biegen eines Fortsatzes der Verstärkungslaschen des ersten Laschenpaares (70) erhalten sind, wobei dieses Biegen bevorzugt um 90° erfolgt.

13. Befestigungsvorrichtung (20) nach einem der vorhergehenden Ansprüche, wobei die Trägerwände (42) dazu ausgebildet sind, zwischen einander einen Befestigungsquerträger (26) des Kraftfahrzeugs aufzunehmen.

14. Befestigungsvorrichtung (20) nach einem der vorhergehenden Ansprüche, wobei mindestens eine der zwei Verstärkungswände (42) mit mindestens einer Befestigungsöffnung (44) versehen ist, die dazu bestimmt ist, Befestigungsmittel zur Befestigung der Befestigungsvorrichtung (20) an einem Befestigungsquerträger (26) des Kraftfahrzeugs aufzunehmen.

15. Tanks zur Aufnahme eines unter Druck stehenden Gases für Kraftfahrzeug, **dadurch gekennzeichnet, dass** er eine Befestigungsvorrichtung (20) nach einem der vorhergehenden Ansprüche umfasst.

## Claims

1. A device (20) for attaching a tank intended to contain a pressurized gas for a motor vehicle,
the device comprising:
- a support member (32) consisting of a single cut and folded sheet metal element (32S), comprising a receiving region (34) delimited by the edges (38) of a cut-out (36) made in a central region of the sheet metal (32S) and configured to receive an end neck (24) of the pressurized-gas tank, as well as a body (40) which is provided with two opposite reinforcing walls obtained by folding the sheet metal (32S) and extending substantially in a plane normal to the axis (X) along which the tank (10) extends, and
- a retaining collar (50) attached to the support member (32), the receiving region (34) and the retaining collar (50) delimiting between them a passage opening (52) configured to receive the end neck (24) of the tank.

2. The attachment device (20) according to the preceding claim, wherein the reinforcing walls (42) are interconnected by a receiving wall (46) of the retaining collar (50) intended to receive attachment means (57) for attaching the retaining collar (50) to the body (40).

3. The attachment device (20) according to any one of the preceding claims, wherein the passage opening (52) comprises an annular receiving element (60), in particular made from polymeric material, configured to receive the end neck (24) of the tank.

4. The attachment device (20) according to any one of the preceding claims, wherein the retaining collar (50) consists of a single cut and folded sheet metal element.

5. The attachment device (20) according to any one of the preceding claims, wherein the reinforcing walls (42) are substantially parallel to one another.

6. The attachment device (20) according to any one of the preceding claims, wherein the body (40) further comprises a first pair of reinforcing tabs (70) obtained by folding the sheet metal (32S) and connecting the free ends of the reinforcing walls (42), so as to partially enclose a volume delimited by the two reinforcing walls (42).

7. The attachment device (20) according to any one of the preceding claims, wherein the body (40) further comprises a second pair of reinforcing tabs (72) obtained by folding the sheet metal (32S) and connecting respective opposite faces of the reinforcing walls (42), so as to partially enclose a volume delimited by the two reinforcing walls (42), the reinforcing tabs (72) of the second pair of tabs being opposite those of the first pair of tabs (70) in pairs.

8. The attachment device (20) according to claim 6 or 7, wherein the reinforcing tabs (70, 72) are substantially parallel to one another.

9. The attachment device (20) according to any one of claims 6 to 8, wherein the reinforcing tabs (70, 72) extend substantially perpendicular to the reinforcing walls (42).

10. The attachment device (20) according to any one of the preceding claims, wherein the body (40) further comprises at least one reinforcing tongue (74) obtained by folding the sheet metal (32S) connecting two opposite segments (38C) of the edges (38) of the cut-out (36) made in the sheet metal (32S), so as to partially close off a volume delimited by the two reinforcing walls (42) and the receiving region (34).

11. The attachment device (20) according to any one of the preceding claims, wherein the body (40) further comprises attachment bases (76) provided with at least one attachment hole (78) designed to receive means (80) for attaching the attachment device (20) to an attachment crossmember (26) of the motor vehicle.

12. The attachment device (20) according to any one of claims 6 to 10 taken in combination with claim 11, wherein the attachment bases (76) are obtained by folding an extension of the reinforcing tabs of the first pair of tabs (70), this folding preferably being at 90°.

13. The attachment device (20) according to any one of the preceding claims, wherein the support walls (42) are configured to receive an attachment crossmember (26) of the motor vehicle between them.

14. The attachment device (20) according to any one of the preceding claims, wherein at least one of the two reinforcing walls (42) is provided with at least one attachment hole (44) designed to receive attachment means for attaching the attachment device (20) to an attachment crossmember (26) of the motor vehicle.

15. A tank for containing a pressurized gas for a motor vehicle, **characterized in that** it comprises an attachment device (20) according to any one of the preceding claims.
